# EUROPEAN PATENT APPLICATION

(11) **EP 0 528 600 A1**
(43) Date of publication of application: **24.02.1993**
(21) Application number: 92307227.6
(22) Date of filing: 07.08.1992
(51) Int. Cl.: C08L 23/02, C08F 255/02

(54) **Polymer blends**

(30) Priority: 20.08.1991 US 747555
(71) Applicant: ROHM AND HAAS COMPANY, Philadelphia Pennsylvania 19105 (US)
(72) Inventor: Hamilton Raymond Gerard, Bensalem, Pennsylvania 19020 (US); McCarty, Mark Thomas, Bensalem, Pennsylvania 19020 (US)
(74) Representative: Angell, David Whilton

(57) **Abstract**

Certain segmented copolymers comprising vinyl polymer grafted to non-polar olefin polymer backbone, in blends with polyolefin, impact improved sag resistance to the polyolefin.

## Description

This invention is concerned with polymer blends having high resistance to sagging without increasing melt viscosity, and to methods of making them.

Non-polar polyolefins, especially polypropylene and polyethylene and mixtures in various low-density, high-density, and linear low-density form, are major articles of commerce for a wide variety of uses. Nevertheless, there exist specialty needs for which the marketplace has not provided a satisfactory answer. For example, it is desired to overcome the difficulty of thermoforming and processing of the polyolefin, especially unfilled, in a molten or semi-molten form (substantially above its melting point); the polymer tends to sag readily under its own weight because it exhibits an undesirably low stiffness, and to form shapes of grossly non-uniform thicknesses upon thermoforming. Attempts to correct this by increasing the molecular weight lead to difficulties in processing the higher molecular weight polymer not encountered with lower molecular weight polymers.

This invention is concerned with the improvement of the physical performance of polyolefin in the melt, upon cooling, and in the solid state and addresses this problem by providing blends of the polyolefin with certain segmented copolymers.

The segmented copolymers used in the blends of the invention comprise non-polar polyolefin and polymer derived from more than 20% of vinyl aromatic monomer with 0 to less than 80% other monomer copolymerizable therewith.

These segmented copolymers may, for example, be made by copolymerizing onto a non-polar polyolefin trunk, at least one chain of polymerized vinyl monomer present in a weight ratio with the polyolefin of from about 1:20 to 4:1. The segmented copolymer is derived from above 20% of vinyl aromatic monomer and up to less than 80% and preferably up to about 60%, based on the total monomer weight, of one or more monomers copolymerizable therewith substituted and unsubstituted acrylates, methacrylates, acrylic acids, methacrylic acids and anhydrides, for example, maleic anhydride. By "segmented" we mean that the copolymer can be a graft copolymer or a block copolymer or a combination of graft copolymer and block copolymer. In one method of manufacturing, when a segmented copolymer is prepared from a polyolefin in solution (for example in t-butyl benzene), the vinyl monomers are added to the polyolefin together with an initiator which generates a constant low radical concentration, or radical "flux", at the solution temperature. These radicals initiate polymerization of the monomer and cause formation of a covalent bond with the trunk.

Another method of manufacturing is to add to the non-polar polyolefin, preferably polypropylene or polyethylene, a vinyl aromatic monomer which is to be grafted to the polyolefin such as styrene, methylstyrene, lauryl methacrylate, N-vinyl pyrrolidone, and mixtures of these with methyl methacrylate and/or butyl acrylate. An initiator is preferably introduced with the monomer. The initiator preferably has a one hour half life between about 110° to about 138° C. The vinyl monomer acts like a solvent which swells the polyolefin. Heating of this mixture will cause the polyolefin to become completely swollen. Further heating will cause the grafting reaction to begin. An exothermic reaction occurs.

The resulting segmented copolymer (which includes homopolymers) may be blended with polyolefin, either as a result of the manner by which it is made or after it is made. It may be extruded into a desired shape, either directly or after pelletization. In either case, the resulting blended product exhibits high sag resistance without an increase in melt viscosity, as compared with similar ungrafted polymers, viz: polyolefins without a high molecular weight chain or chains covalently bonded thereto.

The segmented copolymer may also be blended with polymers other than polyolefins; particularly with mixtures of two or more polymers which are poorly compatible with one another and which may or may not include polyolefins, to improve the compatibility of the resulting mixture.

One process for making the blends of this invention involves swelling the olefin polymer in the vinyl monomer and an initiator, heating to completely swell the olefin polymer and then heating further to above 100°C but below the softening point of the olefin polymer (preferably to about 140°C in the case of polypropylene) to decompose the initiator to begin the grafting reaction. The radicals initiate polymerization of the monomer and formation of a covalent bond therewith on the olefin polymer trunk. The resultant product consists of the olefin polymer with the chain grafted thereto, unreacted olefin polymer, and ungrafted poly(vinyl monomer). The product may be directly blended with the polyolefin (since the swell process directly yields pellets).

The product from the solution process may be pelletized, blended with another polyolefin and extruded into desired shape. Alternatively the reaction mixture may be extruded directly in a devolatilizing extruder to volatilize residual monomer, and thereafter blended with a polyolefin and extruded to form an article in such form as sheet, tube and the like.

In general this invention relates to a polymer blend comprising:
(a) polyolefin and
(b) from about 0.1 to about 50% and preferably from 0.1 to about 10% of segmented copolymer of non-polar olefin polymer for example a polymer or copolymer of polyethylene, polypropylene, polybutylene, poly(4-methylpentene), covalently bonded to a polymer derived from above 20 to about 100% and, preferably, from about 40 to about 100% of vinyl aromatic monomer such as styrene, methylstyrene, dimethylstyrene, ethylstyrene, isopropylstyrene, dichlorostyrene, α-methylstyrene, α-ethylstyrene and the like and from 0 to less than 80% and preferably from 0 to about 60%, based on the total monomer weight, of one or more monomers copolymerizable with the vinyl aromatic monomer such as substituted and unsubstituted acrylates and methacrylates, acrylic acids, methacrylic acids and anhydrides such as maleic anhydride and the like. The copolymerizable monomer may also be a crosslinker containing at least two vinyl groups such as divinyl benzene, glycol dimethacrylate and the like.

In this description, "LDPE" means low-density polyethylene, usually branched, of density of about 0.91 to about 0.94 g/cc; "HDPE" means high-density polyethylene of a density above about 0.95 g/cc; "LLDPE" means linear low-density polyethylene of density about 0.91 to about 0.95 g/cc; "EPDM" includes rubber terpolymers of ethylene, propylene, and a non-conjugated diene monomer, such as 1,4-hexadiene or ethylidenenorbornene.

The term "polar" or "non-polar" polymer, as used herein, is always used relative to polyolefins (generally "non-polar"means polymers which are predominantly formed from monomer units of mono- or di-olefins). "Polar", as generally understood in the polymer art, refers to monomers or polymers which contain an oxygen, nitrogen, or sulfur functionality. However, when compared to polyolefins other materials, such as polystyrene, are also "polar". Methyl methacrylate, acrylonitrile, and vinyl phenyl sulfone are "polar" monomers, whereas polypropylene is a "non-polar" polymer.

The segmented copolymers to be added to the polyolefins to form the blends of this invention may be block or graft copolymers or a mixture of graft and block copolymers. The polymers to be modified in the grafting process include the non-polar olefin homo-polymers and copolymers. Included are polypropylene, polyethylene (HDPE, LDPE, and LLDPE), polybutylene, ethylene-propylene copolymers at all ratios of ethylene and propylene, EPDM terpolymers at all ratios of ethylene and propylene and with diene monomer contents up to 10%, poly(1-butene), polymethylpentene, ethylene-vinyl acetate copolymers with vinyl acetate contents up to 25 %, ethylene-methyl acrylate copolymers, ethylene-methyl methacrylate copolymers, and ethylene-ethyl acrylate copolymers. Also included are mixtures of these polymers in all ratios.

An olefin polymer trunk having a molecular weight of from about 200,000 to about 800,000 M_{w} is especially preferred, but olefin polymers having a molecular weight of about 50,000 to about 200,000 can be used with some beneficial effect. In general, a graft copolymer imparts greater melt-rheology improvement to a high-molecular-weight polyolefin.

Melt flow rate (mfr) is known to correlate with weight-average molecular weight. The preferred range of mfr values for the polyolefin trunks used in preparing the graft copolymers of the present invention are from about 20 to about 0.6 g/10 minutes as measured by ASTM Standard Method D-1238 (condition 230/2.16).

The vinyl aromatic monomers that can be employed to prepare the vinyl polymers are preferably styrene-type monomers such as styrene, methylstyrene, dimethyl styrene, ethylstyrene, α--methylstyrene and α-ethylstyrene. Styrene is the most preferred.

Despite the fact that the vinyl aromatic monomer may be polymerized in a monomer system also containing other copolymerizable monomer to the olefin polymer we, in this disclosure, refer to these monomer systems generally as "vinyl monomer" and the resulting polymer generally as "vinyl polymer".

The vinyl polymer (e.g. styrene homopolymer or copolymer) has a molecular weight of at least about 1,000 and is generally in the range of from about 30,000 to about 150,000 and, preferably, in the range of from about 40,000 to about 60,000.

The initiators employed in the preferred swell process should preferably have a one hour half life at a temperature in the range of from about 110°C to about 138°C. Such initiators include 2,5-dimethyl-2,5-dibenzyl peroxyhexane (138°C) tert-butyl peroxybenzoate (125°C), di-tert-butyl diperoxy phthalate (123°C), methyl ethyl ketone peroxide (133°C), dicumyl peroxide (135°C) tert-butyl peroxycrotonate (118°C); 2,2 bis-t-butyl(peroxybutane) (119°C); t-butylperoxy isopropyl carbonate (119°C); 2,5 dimethyl-2,5-bis(benzoylperoxy)-hexane (118°C); t-butyl peracetate (120°C); di-t-butyldiperoxy-phthalate (123°C). The figures in parentheses are the 1 hr. half-life temperatures.

Other initiators may be employed in other processes; for example, 2,4-pentanedione peroxide (167C), Di-t-butyl peroxide (149C), 2,5-dimethyl-2,5-di(t-butylperoxy)-hexyne (149C), 2,5-dimethyl-2,5-di(t-butylperoxy)-hexyne (149C), 2,5-dimethyl-2,5-di(t-butylperoxy) hexane (138C), and the like.

The compounding proportions of the thermoplastic olefin polymer particles, vinyl monomer and polymerization initiator in the system prior to polymerization is :-
(a) 50-99.9 weight parts, preferably 50-90 weight parts, of the thermoplastic polymer particles;
(b) 50-0.1 weight parts, preferably 50-10 weight parts, of the vinyl monomer; and
(c) 0.05-20 weight parts, preferably 0.1-10 weight parts, of the polymerization initiator per 100 weight parts of the vinyl monomer.

A thermoplastic olefin polymer particle content of less than the stated range (a vinyl monomer content greater than the range) results in agglomeration of the polymer particles during the reaction. A content of more than the stated range (a vinyl monomer content of less than the stated range) results in an inadequately modified product. A polymerization initiator content of less than the range cannot fully polymerize the vinyl monomer, whereas a greater content leads to reactions other than polymerization such as deterioration of the polymer or gelation.

A typical method for impregnating the thermoplastic polymer particles with vinyl monomer involves mixing the thermoplastic polymer particles with the vinyl monomer containing the polymerization initiator (and other additives as required). Another method is by mixing the thermoplastic polymer particles with the polymerization initiator and then adding the vinyl monomer. Since impregnation should be efficiently done by heating under conditions where the polymerization initiator is not decomposed, the temperature should ordinarily be less than 100°C, preferably 40° to 90°C.

Using a large amount of the vinyl monomer may leave behind unimpregnated monomer, but in that event the unimpregnated monomer can be removed and the operation continued.

The impregnation time is usually of the order of from 1/2 to 8 hr. In impregnating the thermoplastic polymer particles with vinyl monomer (and polymerization initiator), auxiliary materials such as plasticizer, lubricant, crosslinker and the like may be simultaneously impregnated (these auxiliary materials may already have been added to the thermoplastic polymer particles or can be compounded after polymerization).

In order to control the molecular weight of the polymer produced by the polymerization of the vinyl monomer, a chain transfer agent such as n-butyl mercaptan, n-dodecyl mercaptan or tert-dodecyl mercaptan may be added.

By increasing the temperature of the impregnated thermoplastic polymer particles obtained in the above-stated manner to a level at which the polymerization initiator is decomposed at a suitable rate, the impregnated vinyl monomer is polymerized to form the modified thermoplastic polymer particles.

Because radical polymerization is involved, heating should be done in a substantially oxygen-free atmosphere and suitable mixing provided during polymerization. Since it is essential to polymerize under conditions where the thermoplastic polymer particles are not dissolved or fused, the polymerizing temperature should be in the range of from about 60° to about 150°C. Exceeding 150°C not only favors gelation but also melt fusion or aggregation of the particles.

The polymerizing time is usually of the order of from 0.5 to about 10 hr and the polymerizing pressure ordinarily on the order of ordinary pressure to 10 kg/sq cm. The impregnating and polymerizing processes are implemented preferably in the absence of water by means of a single apparatus provided with means for heating and mixing without recourse to stirring vanes. In order to impregnate uniformly and distribute the heat evenly, it is desirable that the components of the system be continuously mixed throughout the impregnation and polymerization processes. Mixing by means of stirring vanes is undesirable because the thermoplastic polymer particles are often marred or fractured while the stirring may be inadequate. Mixing should be done by means of a self-moving apparatus without depending on vanes such as the self-rotating type, vibration type or self-rotating and vibration type unit. A unit may also be provided with a baffle plate for increasing the degree of mixing among others, a system in which the unit freely rotates on its own axis is desirable, especially a rotating axis that is set at an angle of less than 80 degrees with respect to the horizontal axis. Any unit having a horizontal axis of rotation which is commonly used is satisfactory. Heating methods involve the circulation of a suitable medium such as steam, hot water or oil or a means for providing electrical heat from within or without the unit may be used. After polymerization, even when simple drying or deodorization is required, post-processings such as ventilation and decompression can be done within the unit without recourse to other means.

The initiator may be introduced together with the vinyl monomer during the polymerization in a manner to maintain a fairly constant radical flux during most of the polymerization. This is done to achieve the correct high molecular weight, a high graft efficiency, the desired molecular weight distribution, and freedom from gel.

Radical flux is defined as the calculated rate of formation of free radicals, expressed in equivalent of radicals per liter per minute. While not capable of being measured experimentally, radical flux may be calculated from the known rate of decomposition of the free radical initiator present at any time, and its instantaneous concentration. Decomposition rates for initiators are determined from published literature, and the concentration is either a known constant, as in continuous feed of initiator, or can be calculated (for a single charge of initiator) from the known decomposition rate constant and the time elapsed since feed.

Good results are achieved when a uniform radical flux is maintained and the radical flux is calculated to be in the range 0.00001 to 0.0005 equivalents of radicals per liter per minute. The preferred range is 0.00002 to 0.0002 equivalents of radicals per liter per minute. The radical flux is dependent on the specific initiator utilized, its concentration and rate of decomposition, and the reaction temperature chosen. The rate of decomposition can be found in tabulated data, such as in "The Polymer Handbook", 2nd Edition, ed. Brandrup and Immergut, Wiley and Sons, New York (1975). Even if the exact rate constant at the temperature of interest is not known, often activation energies are supplied from which the rate can be calculated. The radical flux is: Radical flux = 2(k_{d})(60)(I) where k_{d} is that rate constant for decomposition of the particular initiator in units of inverse seconds, and I the concentration of the initiator in mol/liter. In a batch reaction, I steadily decreases from Iₒ, the initial charge, and the radical flux is not constant. When initiator is continuously fed, a calculation must be made to determine the instantaneous concentration of initiator, but the value is much more constant than in a batch reaction, especially with careful control of initiator feed.

The process may be one shot or when conducted in solution run in a semi-continuous or continuous manner. Vinyl monomer and initiator may be added by means similar to those described above. Additives may also be added when the graft copolymer is blended with the matrix polymer. Such additives may include stabilizers against light or heat, such as benzotriazoles, hindered amines, alkyl polysulfides such as dialkyl disulfides, and the like, lubricants, or plasticizers; flame retardant; and the like.

The product is isolated by stranding, cooling, chopping, drying, and bagging, or other known collection techniques. In the preferred swell process (i.e. the one shot process) the product is already pellets and needs merely to be collected.

The polyolefin and the graft copolymer may be blended by mixing the dry feed materials and extruding either directly to form a film, sheet or the like, or by collecting the blend and reprocessing it into the desired article, or by adding the polyolefin in the course of the devolatilization.

Throughout this description the term "polyolefin" is used when referring to component (a) of the blend and "olefin polymer" when referring to the trunk of the segmented polymer. However, no compositional distinction between the two materials is intended.

Polyolefins are often produced with one or more stabilizers to prevent degradation of the polymer appearance or physical properties during processing and/or end use. Such stabilizers may include metal salts such as metal stearates, which act as acid acceptors, hindered phenols, or phosphites which act as antioxidants, and sulfur-containing organic esters or derivatives, added as heat stabilizers. Examples of such additives, which are usually proprietary to the supplier, are metal stearates, 2,6-dimethylphenolic compounds, Irgafos 168 and thiodiesters of long-chain alcohols. Polyolefins may also contain light stabilizers, such as hindered amines, benzotriazoles, and the like. All of the polyolefins used in the present examples are thought to contain small amounts of these proprietary stabilizers.

One preferred blend composition has at least about 0.2% of the total formulation (polyolefin plus segmented copolymer) of a chemically segmented polymer or copolymer within the preferred molecular weight limits. The preferred maximum amount is about 10% grafted polymer, with up to about 5% segmented polymer being especially preferred for cost optimization and optimization of most properties of the blend.

Optionally, the blend of concentrate and polyolefin may be further modified by the introduction of fillers (both inorganic and organic), fibers, impact modifiers, colorants, stabilizers, flame retardants, and/or blowing agents.

Blowing agents may be gases, such as nitrogen or carbon dioxide, admixed with the polymer melt in the extruder and allowed to expand upon extrusion. More often, blowing agents are solids which liberate gases, usually nitrogen, at a specific melt temperature, and which are mixed into the melt, or blended from a pre-compounded mixture of the blowing agent dispersed in a polymeric matrix. The melt temperatures for the polyolefins are typically in the range of about 200° to about 230°C, although other temperatures may be used, depending on the specific blowing agent. Solid blowing agents include azo compounds such as azodicarbonamides, azoisobutyronitriles, hydroazo compounds, or compounds containing the nitroso group.

The blend of the segmented copolymer and polyolefin is useful in thermoforming, film making (especially blowing and extruding), blow molding, fiber spinning, acid and basic dyeing, foaming, extrusion (sheet, pipe, and profile), coextrusion (multilayer film, sheet, preforms, and parisons, with or without the use of tie layers), hot melt adhesives, calendering, and extrusion coating (for the preparation of polymer/ fabric, carpet, foil, and other multilayer constructions). Such graft copolymers, especially with small amounts of copolymerized acid functionality, are useful when blended with polyolefins for improved printability. The grafts themselves may be used as tie layers between otherwise incompatible polymers.

In extrusion, the copolymer is useful, especially with LLDPE, at reduction of melt fracture without an effect on the melt flow rate.

When polypropylene is modified with the copolymers of the present invention, it may be employed in the manufacture of many useful objects, such as extrusion- or injection-blown bottles for packaging of foodstuffs, aqueous solutions such as intravenous feeds, hot-filled items such as ketchup, or extruded articles in profile form such as clips, scrapers, window and door casings and the like. The foamed articles may be used as substitutes for wood in moldings, for packaging materials, for insulation or sound-deadening materials, for food containers, and other rigid-article applications. Films may be used in many protective or wrapping applications, such as for food packaging, blister packaging of consumer goods, and the like.

The copolymers of the present invention are useful in preparing polyolefin fibers, especially polypropylene fibers; they are especially useful when the graft copolymer is formed from a polypropylene trunk. Polypropylene is relatively easy to process into fibers having high strength and toughness.

Polypropylene fibers show certain deficiencies which include difficulty in dyeing and poor long-term dimensional stability. Grafts containing functional sites capable of accepting dye may be prepared by the present process by incorporating low levels of dye-accepting monomers, such as methacrylic acid, dimethylaminoethyl methacrylate, N-vinylpyridine, and the like. The improved sag resistance noted for the present segmented polymers in a polypropylene matrix should correspond to improvements in creep resistance of the fiber.

Polypropylene may be formed into fibers by slitting tape from extruded film to form large-denier, coarse fibers, by extruding monofilaments into large-denier fibers with a controlled cross-sectional size, or by extruding multifilaments through a spinnerette to produce bundles of small-denier fibers. In all cases, the fibers may be draw-textured.

Polypropylene fibers may be used for, among other things, strapping, netting (including fish nets), slit tape, rope, twine, bags, carpet backing, foamed ribbon, upholstery, rugs, pond liners, awnings, swimming-pool covers, tarpaulins, lawn-furniture webbing, shades, bristles, sutures, cigarette filters, nonwoven fabrics, such as for tea bags, bed sheets, bandages, diaper liners and the like, and for doll hair, apparel and the like.

The copolymer of the present invention may also be used to improve the compatibility of polymers in blends where they would otherwise be poorly compatible. The segmented copolymer is incorporated into such blends, preferably at levels of from about 0.2 to about 10 %, preferably from about 0.5 to about 5%, and more preferably from about 0.8 to about 2.5%, to achieve the desired improvement in compatibility. Higher levels of the segmented copolymer may be used, but increases above the preferred level generally show only small improvements in compatibility.

As noted above, compatibility is not easily predicted. As a general rule non-polar polymers are poorly compatible with more polar polymers, but poorly compatible blends may also be found experimentally among polar-polar or non-polar -non-polar blends. Examples of the non-polar polymers are olefinic polymers such as high- and low-density polyethylene and linear low-density polyethylene, polypropylene including atactic polypropylene, poly-1-butene, poly-iso-butylene, ethylene-propylene rubber, ethylene-acrylic acid copolymer, ethylene-propylenediene terpolymer rubber, ethylene-vinyl acetate copolymer, poly (ethylenepropylene), polymethylpentenes, and ionomers such as polymers of ethylene with metal-salt-neutralized acrylic acid.

Relatively more polar polymers, called "polar polymers" for the purposes of this disclosure, include acrylonitrile-butadiene-styrene polymer, acetal polymers, polyarylates, acrylic-styrene copolymers, acrylonitrile-styrene-acrylic polymers, acrylonitrile-styrene polymers modified with ethylene-propylene rubber, cellulosics, polyester-polyether block copolymers, polyesters such as polybutylene terephthalate and polyethylene terephthalate, and including liquid-crystal polyesters, polyetheramides, polyetheretherketones, polyetherimides, polyethersulfones, ethylene-vinyl alcohol copolymers, polyvinyl chloride, chlorinated polyvinyl chloride, polyvinylidene chloride and fluoride, styrene polymers such as polystyrene, high-impact polystyrene, styrene-acrylonitrile copolymers, styrene-butadiene copolymers, styrene-maleic anhydride copolymers, alkyl-substituted styrenes copolymerized with styrene alone or with the additional monomers listed for styrene, polyphenylene ether, polyphenylene sulfide, polysulfone, polyurethane, polyamides, i.e., nylons such as nylon 6, nylon 6·6, nylon 6·9, nylon 6·10, nylon 6·12, nylon 11, nylon 12, amorphous nylons, polyamideimide, polycaprolactone, polyglutarimide, poly(methyl methacrylate), other C₁ to C₈ poly(alkyl (meth)acrylates) and polycarbonates. The acrylic polymers referred to above are polymers containing at least 50 weight percent, and preferably at least 80 weight percent, of mers of acrylic acid and/or methacrylic acid (referred to collectively as (meth)acrylic acid) or their esters, preferably their alkyl esters and more preferably their alkyl esters in which the alkyl group contains from one to eight, preferably one to four, carbon atoms. The remaining mers are those from one or more monomers copolymerizable with the (meth)acrylic acid or ester by free-radical polymerization, preferably vinylaromatic monomers, vinyl esters or vinyl nitriles, and more preferably mers of styrene or acrylonitrile.

In the examples which follow, polymer concentrates and polymer blends were tested using standard procedures which are summarized below.

The polypropylene concentrate and any additives were blended in the melt on a 7.6 cm by 17.8 cm electric mill with a minimum gap of 3.8 mm set at 190°C. Once the material had fluxed, it was mixed an additional 3 minutes. Higher temperatures were used for higher viscosity materials (for example, mfr=0.5-2 material was done at 195-210°C). While still hot, the material was either compression molded or cut into small chunks (about 1-2 cm in each dimension) for granulation (5 mm screen). It is of interest that the additives of the present invention contribute to easy release from hot metal surfaces, such as mill rolls, Haake Rheocord bowls, etc.

The polyolefin blends were compression molded in an electrically heated Carver press 15 x 15 cm or Farrel press 30.5 x 30.5 cm. The samples were molded between stainless steel with an appropriate spacer to provide the required thickness 0.25-3.8 mm. In one method the hot melt was taken directly from the mill roll and placed between two stainless steel sheets. This was then placed in the press set at 190°C and pressed at high pressure (68-91 metric tonnes for the Farrel press and 6820 kg for the Carver press). After three minutes the mold was placed in an unheated press at high pressure for three minutes. In the other procedure, granulated material or pellets produced from an extrusion, Haake, or milling operation were dried and then compression molded. The procedure used was the same as for molding a melt except that a 5 minute preheat was used while maintaining a slight pressure on the press. This was followed by the high pressure molding in the hot and cold presses. A hot press of 190°C was usually sufficient for mfr=4 polypropylenes, but higher viscosity polypropylenes would split during sag testing unless higher molding temperatures were used (195-210°C).

The sag tests are performed on a compression molded sheet 10 x 10 x 0.15 cm. This sheet was clamped in a frame with a 7.6-cm-square opening. There were metal rulers attached to the front and back of the frame for use in measuring sag. The frame and sheet were placed in a hot, forced air oven (typically at 190°C). The amount of sag of the center of the sheet was then recorded as a function of time. Typically, the sag was first recorded at 2.5 cm but for slow sagging materials sags as low as 16 mm were recorded. Data was recorded up to 10.2 cm of sag or for 30 minutes, whichever occurred first.

The term "slope" refers to the slope of a plot of the natural logarithm of the sag in centimeters versus time, resulting in a straight line. A high slope indicates that the material sags quickly while a low slope indicates that it sags slowly. The advantage of comparing slopes in this manner is that it eliminates any differences in oven cooling when the sample is introduced.

In the following examples, which are given only to illustrate the present invention, all percentages are by weight unless otherwise specified and all reagents are of good commercial quality unless otherwise specified.

### EXAMPLES

The following procedure and apparature is used to prepare the segmented copolymers.

### APPARATUS and GENERAL PROCEDURE

A 2 part 1 liter resin kettle with a 4 neck top is equipped with a Teflon paddle stirrer, a thermocouple with a temperature control unit, a heating mantle and a Allihn condenser. (All joints should be ground glass.) The interface between the top and the bottom of the reactor must have a Teflon gasket. The stirrer adaptor apparatus must maintain a vacuum when it is applied to the reaction vessel.

The reactor should be able to maintain the vacuum at the same level at which is supplied, 100917 N/m² (30 inches of Hg.) for at least 15 minutes.

Charge polypropylene into the reactor. Degas the reactor and replace with nitrogen 5 times. After the last degassing, allow nitrogen to slowly free flow through the reactor. Mix the styrene - initiator solution and degas with nitrogen for 20 minutes. Pump the solution into the reactor. Commence the swell phase at the recommended temperature. When the swell is completed, set temperature controller to 115°C. Reaction will begin. The resulting exothermic event will cause the temperature to reach approximately 140°C. As the temperature drops maintain the temperature at 140°C. Collect the product and dry overnight at 80°C in a vacuum oven.

### Example 1 - Blend of 98% Polypropylene and 2% Segmented Copolymer

### Step A - Segmented Copolymer

Polypropylene (125g) beads are added to a 1L kettle type reactor and the system evacuated and refilled with nitrogen. The styrene monomer (30 ml) containing tert-butylperoxy benzoate initiator (200mg) is degassed by bubbling nitrogen through for 20m. The monomer - initiator solution is then rapidly pumped into the polypropylene (5m). While the polypropylene and styrene is stirred the temperature is raised to 90°C (swell temperature). The temperature is maintained for 1h (swell time). The temperature is then raised to 140°C for 2h. The heating is then removed and the still free flowing pellets are dried overnight at 60° C in a vacuum oven to yield 146 g of segmented copolymer mixture.

### Step B - Blend of 98% Polypropylene and 2% of Segmented Copolymer of Step A

The sag slope of this material was determined as described above and shown to be 0.039 when blended into polypropylene at 2%. The mfr of the blend is 4.18 (condition L of ASTM D-1238.)
(The MFR of the polypropylene is 3 to 5 - Condition L.)

The material was extracted continuously with ethyl acetate for 16h in order to remove the polystyrene homopolymer. The molecular weight of the polystyrene homopolymer was determined to be M_{w} 57,000 and Mn 17,000.

### Example 2 - Blend

### Step A - Segmented Copolymer

The experiment described in example 1 was repeated in order to determine the reproducibility of the swell process. A yield of 145g of product was obtained.

### Step B - Blend of 98% Polypropylene and 2% Copolymer of Step A

A sag slope of 0.046 was measured (2% blended into polypropylene) and the molecular weights were determined to be M_{w} 41,800 and Mn 12,600.

### Example 3 - Blend

### Step A - Segmented Copolymer

The experiment in example 1 was repeated but with the following changes. The quantity of polypropylene was increased to 175g and the initiator level (tert-butyl peroxy benzoate) increased to 500mg. 200 g was obtained. The swell temperature was 85° C and the swell time was 0.5h.

### Step B - Blend

The blend had a measured sag slope of 0.021 when blended into polypropylene at 1%. The polystyrene homopolymer was obtained upon continuous extraction with ethyl acetate and its molecular weight determined to be M_{w} 8240 and Mn 4570.

### Example 4 - Blend

### Step A - Segmented Copolymer

The experiment described in example 1 was repeated but with the following changes. The polypropylene quantity was decreased to 85g and the initiator amount (tert-butyl peroxy benzoate) decreased to 100mg. The swell temperature was increased to 95C and the swell time increased to 2h. Yield 101 g.

### Step B - Blend of 98% PP and 2%

A blend of 98% polypropylene and 2% of the graft copolymer of Step A had a measured sag slope of 0.105 when blended into polypropylene at 2%.

### Example 5 - Blend

### Step A - Segmented copolymer

Polypropylene (100g) , of MFR 4, was placed in a 1L reaction kettle and t-butylbenzene (400ml) was added. The reaction vessel and contents were degassed and heated to 160C under a nitrogen atmosphere in order to dissolve the polypropylene and subsequently this solution was cooled to 140C.

The monomer and initiator solution (150ml of styrene and 357mg of t-butyl peroxybenzoate) was deoxygenated by bubbling nitrogen through for 30 min. The monomer and initiator was then pumped into the polypropylene solution at a rate of 2.5 ml per minute while maintaining the temperature at 140C.

The temperature was held at 140C for a further hour and then the reaction allowed to cool to room temperature.

The solvent was removed by heating at 60C in a vacuum oven overnight to yield 146 g of segmented copolymer.

### Step B - Blend

The segmented copolymer of Step A was milled at 4% into polypropylene (MFR 4) and a plaque prepared. A sag slope of 0.021 was obtained for this plaque.

In one modification of this solution process the monomer styrene above was replaced with a mixture of styrene (142.5ml) and methacrylic acid (7.5ml). The plaque prepared from this product (2% into polypropylene of MFR 4) exhibited a sag slope of 0.136.

### Example 6 - Blend 96% PP - 4% Copolymer

As in Example 1 but replacing the styrene (30ml) with styrene (27ml) and methyl methacrylate (3ml). This blend has a sag slope of 0.02 when milled into polypropylene at 4 %.

### Example 7 - Blend - 96% PP - 4% Copolymer

As in Example 1 but increasing the polypropylene quantity to 150g and replacing the styrene (30ml) with styrene (32.4ml) and maleic anhydride (3.3g) and increasing the initiator quantity (to 240mg). This blend has a sag slope of 0.035 when milled into polypropylene at 4%. The blend was exhaustively extracted with ethyl acetate and an infra-red spectrum contained peaks at 1857 cm⁻¹ indicative of the presence of the anhydride in the product and at 700 cm⁻¹ indicative of polymerized styrene.

### Example 8 - 96% Polyethylene 4% Copolymer

As in Example 1 but replacing the polypropylene (125g) with polyethylene (150g) and increasing the styrene (30ml) to styrene (36ml) and the initiator (to 240mg). The blend had a sag slope of 0.036 when blended into polypropylene at 4%.

### Example 9 - Blend 96% PP - 4% Copolymer

As in Example 1 but replacing the styrene (30ml) with styrene (27ml) and butyl acrylate (3ml), increasing the polypropylene quantity (to 150g) and the initiator quantity (to 240mg). The product had a sag slope of 0.026 when blended into polypropylene at 4% and the exhaustively extracted (with ethyl acetate) blend had peaks at 1730 (polymerized butyl acrylate) cm⁻¹ and 700 cm⁻¹ (polystyrene) in its infrared spectrum.

### Example 10 - Blend - 96% PP - 4% Copolymer

As in Example 1 but replacing the styrene (30ml) with a mixture of lauryl methacrylate (29ml) and methyl methacrylate (7ml), increasing the polypropylene quantity (to 150g) and the initiator quantity (to 240mg). The product had a sag slope of 0.086 when milled into polypropylene at 4% and the exhaustively extracted material (with ethyl acetate) had peaks in its infra red spectrum at 1733 cm⁻¹ and at 700 cm⁻¹.

### Example 11 - Blend of 96% PP - 4% Copolymer

As in Example 1 but replacing the styrene (30ml) with styrene (21.6ml), methyl methacrylate (7.2ml) and N-vinyl-2-pyrrolidone (7.2ml) and increasing the polypropylene quantity (to 150g) and the initiator quantity (top 240mg). The blend had a sag slope of 0.031 when blended into polypropylene (at 4%) and the infra red spectrum of the exhaustively extracted blend (with ethyl acetate) has peaks at 1728 (polymethyl methacrylate) cm⁻¹, 1685 cm⁻¹ (polymerized N-vinyl-2-pyrrolidone) and 700 cm⁻¹ (polystyrene).

### Example 12 - Blend - 96% PP - 4% Copolymer

As in Example 1 but replacing the styrene (30ml) with a mixture of styrene (22ml) methyl methacrylate (7.0ml) and glycidyl methacrylate (7.0ml and increasing the polypropylene quantity (to 105g) and the initiator quantity (to 240mg). The blend had a sag slope of 0.036 when blended into polypropylene at 4%. The exhaustively extracted blend (with ethyl acetate) exhibited peaks in the infra-red at 1729 cm⁻¹ (polymerized methacrylates) and 700 cm⁻¹ (polystyrene).

### Example 13 - Blend - 96% PP - 4% Copolymer

As in Example 1 but replacing the styrene (30ml) with a mixture of styrene (21.6ml) methyl methacrylate (10.8ml) and maleic anhydride (3.3g) and increasing the polypropylene and initiator amounts (to 150g and to 240mg respectively). A blend of 96% polypropylene and 4% of the copolymer (styrene, methyl methacrylate and maleic anhydride) has a sag slope of 0.042. The exhaustively extracted blend (ethyl acetate) exhibited peaks in the infra red at 1720 cm⁻¹ (methyl methacrylate) at 1780 cm⁻¹ and 1856 cm⁻¹ (polymerized maleic anhydride) and at 700 cm⁻¹ (polymerized styrene).

### Example 14

A 1L pressure reactor was charged with polypropylene (Himont (6523), 50g), styrene (50g), initiator (tert-butyl peroxy benzoate, 200 mg) and deionized water (343 g). The system was heated to 140°C under a nitrogen atmosphere and at a pressure of 44 psi. It was held at this temperature for 1h. Only a small amount of agglomeration of the polymer was observed in the reactor. The reaction was cooled and the copolymer collected by filtration and then dried in a vacuum oven to yield 97.7 g of material. A blend of this material with 4% polypropylene had a sag slope measured at 0.03.

## Claims

1. A polymer blend comprising:
(a) polyolefin; and
(b) from 0.1 to 50% by weight of segmented copolymer of non-polar olefin polymer containing at least 75% by weight olefin mers and optionally mers of one or more of vinyl acetate, methyl acrylate, methyl methacrylate and ethyl acrylate and polymer derived from a monomer system containing above 20 to 100% by weight of vinyl aromatic monomer and from 0 to less than 80% by weight of one or more monomers copolymerizable with the vinyl aromatic monomer.

2. A blend as claimed in claim 1 wherein the segmented polymer is derived from a monomer system containing 40 to 100% of vinyl aromatic monomer and 0 to 60% of one or more monomers copolymerizable with the vinyl aromatic monomer.

3. A blend as claimed in claim 1 or 2 wherein the segmented copolymer comprises from 0.2 to 10% by weight of the total of (a) plus (b).

4. A blend as claimed in any preceding claim wherein the non-polar olefin polymer used in (b) and/or polyolefin (a) comprises units of ethylene, propylene, butylene and/or (4-methylpentene) and may optionally contain up to 25% by weight of units of other copolymerizable monomers, and preferably is polypropylene.

5. A blend as claimed in any preceding claim wherein the vinyl aromatic monomer comprises styrene, methyl styrene, dimethyl styrene, ethylstyrene, isopropylstyrene, dichlorostyrene, α-methylstyrene, α-ethylstyrene, and/or divinylbenzene.

6. A blend as claimed in any preceding claim wherein the M_{w} of the vinyl polymer in (b) is at least 1,000, preferably in the range of from 30,000 to 150,000.

7. A blend as claimed in claim 6 containing at least 0.2%, by weight of (a) plus (b), of (b).

8. A blend as claimed in any preceding claim in the form of a shaped article, especially an extruded, calendered, thermoformed or molded article, such as a fiber, sheet, film or hollow container.

9. A process for preparing a segmented copolymer which comprises:
Step (a) mixing non-polar olefin polymer containing at least 75% by weight olefin mers with vinyl monomer comprising above 20 to 100% by weight vinyl aromatic monomer and 0 to less than 80% by weight of one or more monomers copolymerizable therewith, in the presence of an initiator having a 1 hour half life at a temperature in the range of from 110°C to 138°C;
Step (b) heating the mixture to a temperature at which the polyolefin completely swells, preferably up to 90 °C; and
Step (c) continuing heating to below the softening point of the polymer until grafting occurs, preferably to above 100°C.

10. The use of segmented copolymer as defined in any of claims 1, 2, 4, 5 or 6 to improve the compatibility of two or more other polymers.
